# FASCICULE DE BREVET EUROPEEN

(11) **EP 3 502 507 B1**
(45) Date de publication et mention de la délivrance du brevet: **29.04.2020**
(21) Numéro de dépôt: 18211474.4
(22) Date de dépôt: 11.12.2018
(51) Int. Cl.: F16D 55/227, F16D 65/097

(54) **FREIN A DISQUE MODULAIRE MUNI D'UNE CHAPE DE TAILLE REDUITE ET DE SYSTEME DE MONTAGE DE PATIN DE FREIN**
MODULARE SCHEIBENBREMSE, DIE MIT EINEM GELENK GERINGER GRÖSSE UND EINEM MONTAGESYSTEM DES BREMSBELAGTRÄGERS AUSGESTATTET IST
MODULAR DISC BRAKE PROVIDED WITH A COMPACT CAP AND BRAKE SHOE MOUNTING SYSTEM

(30) Priorité: 22.12.2017 FR 1763095
(43) Date de publication de la demande: 26.06.2019
(73) Titulaire: Foundation Brakes France, 93700 Drancy (FR)
(72) Inventeur: PASQUET, Thierry, 94300 VINCENNES (FR); LABARRE, Xavier, 49250 SAINT GEORGES DU BOIS (FR)
(74) Mandataire: IPAZ

(56) Documents cités:
- EP-A1- 2 072 850
- EP-A2- 0 989 320
- WO-A1-2017/046392
- DE-A1-102008 002 538
- DE-A1-102016 212 653
- FR-A1- 2 862 360
- FR-A1- 2 903 161
- US-A1- 2011 120 818
- US-A1- 2014 318 905

## Description

L'invention se rapporte à un frein à disque pour véhicule routier, en particulier pour automobile. L'étrier (1) de ce frein (100) comprend un corps d'étrier (3) recevant un piston de frein actionnant un patin intérieur (19), et un nez d'étrier (6) recevant un patin extérieur (18). Le frein comprend une chape (2) portant l'étrier et le patin intérieur (19).

Le frein comprend :
- un nez (6) d'étrier comprenant des alésages de guidage (7) où coulissent une colonnette de guidage (8) solidaire de la chape (2),
- un ou plusieurs ressorts de maintien radial, chacun comprimé entre sur une oreille du patin intérieur, une face inférieure ou supérieure du logement de patin la chape ;
- un ou plusieurs glisseurs 30, complémentaires au logement de patin de la chape, placés entre l'oreille du patin intérieur et son logement de.

L'invention propose aussi un véhicule intégrant ce frein, et un procédé d'assemblage du frein incluant une étape de choix d'un nez d'étrier parmi une pluralité de modèles différents et compatibles.

### Etat de la technique

Dans un véhicule, en particulier routier, la fonction de frein de stationnement et/ou de secours consiste à appliquer et maintenir un frottement de patins de freins liés à une partie solidaire du châssis, sur une partie mobile en rotation qui est liée à une ou plusieurs roues, typiquement un disque ou un tambour.

Dans le cas du frein à disque, le frein est habituellement situé sur un moyeu d'au moins une roue du véhicule, de telle manière que la roue communique un mouvement de rotation au disque de frein. Le disque comporte une piste de frottement annulaire sur chacune de ses faces. Le frein comporte un étrier qui chevauche le disque par une branche intérieure du côté du véhicule, et une branche extérieure du côté de la roue, ces deux branches se faisant face de part et d'autre d'un plan d'un disque de frein et se rejoignant en dehors la périphérie du disque. Les deux branches de l'étrier portent chacune un (ou plusieurs) patin de frein, formant une paire disposée symétriquement des deux côtés du disque de frein. Lors du freinage, ces patins sont actionnés l'un vers l'autre pour venir serrer le disque entre eux, en frottant chacun sur l'une des pistes annulaires de frottement.

Une famille de freins à disque comporte un étrier mobile, flottant ou coulissant, monté sur une chape solidaire du véhicule ou du moyeu, et dans lequel seul le patin intérieur est actionné. Pour cela, la partie intérieure de l'étrier, ou corps, porte un actionneur qui déplace un piston de frein, en translation selon une direction parallèle à l'axe du disque, pour venir appuyer ce patin intérieur contre le disque. Le patin extérieur qui lui est symétrique prend directement appui contre l'autre branche de l'étrier, appelée nez.

L'étrier est mobile en translation axiale par rapport à la chape, et se déplace de lui-même pour équilibrer entre eux les efforts de serrage appliqués des deux côtés du disque par les deux patins symétriques. Lors d'un freinage du véhicule, obtenu par un rapprochement des patins contre le disque, l'étrier s'avance vers le moyeu pour que le nez et le patin extérieur se rapproche du disque. Inversement, lors d'un défreinage du véhicule, obtenu par un écartement des patins par rapport au disque, l'étrier s'écarte du moyeu pour que le patin extérieur s'éloigne du disque.

La chape maintient l'étrier immobile en rotation, dans une position où il chevauche le disque, c'est à dire de part et d'autre du plan du disque tout en passant à l'extérieur de la périphérie du disque. En outre, la chape maintient les patins de frein immobiles en rotation, directement ou par l'intermédiaire de l'étrier, transmettant ainsi au disque de frein un effort tangentiel qui produit un couple de freinage.

Parmi les freins à étrier mobile, un type de frein utilise un étrier dit coulissant. La chape réalise alors un guidage de l'étrier selon une translation axiale, lors de ses mouvements d'avancement/d'écartement par rapport au disque. De façon traditionnelle, il est connu que la chape comporte des alésages de guidage, qui reçoivent des colonnettes de guidage portées par l'étrier (voir par exemple le document DE 10 2016 212653 A1). Les colonnettes et leurs alésages de guidage coopèrent ensemble pour autoriser l'avancement/l'écartement de l'étrier par rapport au disque et le guider en translation. Ces colonnettes permettent aussi à l'étrier d'être fixe en rotation par rapport à la chape. La chape s'étend au-dessus du disque avec ses alésages, dans lesquels coulissent les colonnettes qui sont fixées par leur base au corps de l'étrier. La chape présente, de chaque côté du disque, un logement qui encadre et maintient le patin correspondant, et récupère ainsi la majeure partie du couple de freinage.

Dans un montage alternatif d'étrier coulissant, par exemple dans le document FR2747751, il a été proposé de réaliser un frein à étrier coulissant dans lequel les colonnettes sont portées par la chape, et coulissent dans des alésages formés dans l'étrier. Ce type d'architecture présente cependant des inconvénients, par exemple en raison des efforts tangentiels reçus transmis par le nez et la voûte de l'étrier. Les performances de rigidité en sont affectées et rendent le compromis de poids plus délicat à optimiser. Des vibrations différentes peuvent être engendrées, et donner lieu à des bruits de fréquences nouvelles, ou aggravés dans les fréquences déjà existantes.

Ainsi, il est intéressant d'améliorer les modèles existants de freins à étrier coulissant, par exemple en matière de confort et performances mais aussi de coûts de fabrication et de maintenance.

Un but de l'invention est de pallier en tout ou partie les inconvénients de l'état de la technique.

L'invention recherche en outre à améliorer la rigidité du frein, à diminuer sa masse, sa complexité et son coût de fabrication et d'assemblage, ou à améliorer un compromis de ces différents facteurs.

Elle vise aussi à permettre une meilleure souplesse et de diminuer ou contourner certaines contraintes dans les processus de modification ou d'adaptation d'un modèle de frein existant à des besoins différents, par exemple en matière de performances, dimensions, coût, ou un compromis de ces différents facteurs.

### Exposé de l'invention

Selon un premier aspect, l'invention propose un frein à disque pour véhicule comprenant au moins :
- un étrier de frein à disque de type à étrier coulissant, comprenant deux branches, agencées pour enjamber un secteur d'un disque de frein avec une branche de chaque côté du disque, lequel étrier est muni :
   ∘ d'un corps comprenant au moins un cylindre de piston, notamment hydraulique, ménagé dans une partie, aussi appelée fût, réalisant une branche intérieure de l'étrier, lequel cylindre est agencé et configuré pour recevoir un piston de frein qui est monté coulissant et est actionné pour appuyer un patin de frein intérieur contre une face intérieure du disque de frein,
   ∘ d'un nez, solidaire dudit corps par une voûte, ledit nez réalisant une branche extérieure de l'étrier et recevant de manière fixe un patin de frein extérieur ;
- une chape, fixe en rotation par rapport au véhicule et s'étendant d'un seul côté par rapport au plan du disque de frein, ladite chape comprenant au moins un logement de patin agencé et configuré pour recevoir le patin de frein intérieur de manière fixe en rotation et coulissante axialement.

Lesdits patins de frein sont disposés de part et d'autre du disque de frein de façon à être appliqués contre les faces opposées du disque sous l'effet d'un actionnement du piston de frein et par appui sur une face intérieure du nez, et agencés de sorte que :
- le patin de frein intérieur comprend deux oreilles de montage dépassant de deux de ses extrémités, chaque oreille étant agencée et configurée pour être montée dans un logement de patin de ladite chape de manière coulissante axialement, et coopérer avec lui pour recevoir :
   ∘ un maintien tangentiel, par butée sur une surface latérale de logement, et
   ∘ un maintien radial, par butée sur une surface inférieure de logement et sur une surface supérieure de logement ;
- le patin extérieur est maintenu fixe en rotation et en translation par le nez de l'étrier.

Selon l'invention, l'étrier comprend deux alésages de guidage, chaque alésage étant agencé et configuré pour recevoir de façon coulissante une colonnette de guidage qui est portée de façon solidaire par la chape, l'étrier étant ainsi mobile en translation sur la chape selon une direction axiale.

Le frein est en outre caractérisé en ce qu'il comprend un ou plusieurs ressorts de maintien radial, agencés et configurés chacun pour coopérer avec une oreille du patin de frein intérieur, chaque ressort de maintien radial étant de forme linéaire ou lamellaire et comportant :
- une branche d'appui placée contre la face inférieure de l'oreille du patin, et
- une branche de glissement de forme courbe dont une surface convexe vient en contact glissant avec la surface inférieure du logement,
lesdites branches étant reliées entre elles de façon à écarter la face inférieure de l'oreille de la surface inférieure du logement.

Le frein comprend un ou plusieurs éléments de glissement, typiquement un pour chaque oreille. Un tel élément de glissement, aussi appelé glisseur ou guide de glissement, ou "slider" en terminologie anglo-saxonne, comporte un élément lamellaire d'une forme complémentaire à la forme du logement de patin de la chape, qui est placé entre une oreille du patin intérieur et le logement de patin correspondant dans la chape, et présente au moins :
- une partie ou aile de glissement, qui s'appuie sur une surface inférieure du logement et reçoit un appui de la branche de glissement du ressort de maintien radial, pour fournir à l'oreille un maintien radial tout en lui permettant un glissement axial, et
- une partie ou aile de butée tangentielle, qui s'appuie sur une surface latérale du logement et reçoit un appui de l'oreille pour lui fournir un maintien tangentiel lors du freinage.

Une telle architecture produit un compromis particulièrement avantageux, à la fois simple et économique à produire, qui présente une masse réduite tout en permettant pourtant un guidage fiable et précis des éléments mobiles. En effet, cette disposition des éléments de guidage de l'étrier se combine particulièrement bien avec ce mode de guidage du patin intérieur, lequel apporte des performances appréciables de réduction des bruits dans un grand nombre de fréquences et de configuration d'utilisation.

De préférence, le frein à disque comprend au moins un ressort de maintien radial pour chaque oreille du patin de frein intérieur. Cette caractéristique a pour avantage d'améliorer le glissement des oreilles du patin lors d'une commande de freinage. Selon un mode de réalisation particulier, il comprend exactement un ressort de maintien radial pour chaque oreille.

Selon n'importe quel mode de réalisation du frein, ledit ressort de maintien radial est réalisé par un élément linéaire ou lamellaire fournissant un appui par une courbure réalisée dans un plan perpendiculaire au plan de frottement dudit patin intérieur.

De manière préférentielle, chaque branche de glissement du ressort de maintien radial est située parallèlement à un plan perpendiculaire au plan de l'oreille et ayant une surface convexe destinée à glisser sur ladite surface inférieure du logement.

Chaque ressort de maintien radial comprend une troisième branche et une quatrième branche reliées entre elles, celles-ci permettant de relier la branche d'appui et la branche de glissement pour les écarter l'une de l'autre.

De préférence, chaque élément de glissement présente une partie lamellaire formant une aile de butée tangentielle, dite « basse » qui s'appuie sur une surface du logement de la chape qui est plane et verticale (c'est à dire radiale, en définissant le bas comme du côté de l'axe de rotation du disque) et forme ainsi une surface de reprise d'appui lors du freinage. Cette aile de butée tangentielle, située en dehors de la partie qui accueille l'oreille du patin, est dite "basse" parce que son centre d'appui est situé plus près de l'axe de rotation que le centre de la force de freinage exercée entre le patin et le disque. Cette caractéristique permet en particulier d'écarter la direction de l'effort d'appui du centre de frottement réel du patin, ce qui stabilise sa tendance à la rotation dans le plan du disque ("tilting" en vocabulaire anglo-saxon) dans un seul sens. On obtient ainsi moins de dispersion dans les mouvements du patin, une limitation des bruits et un meilleur comportement au freinage, en particulier à basse pression et par exemple en dessous de 10 bars.

Selon un mode de réalisation particulier, l'élément lamellaire de glissement comporte un ressort de précharge tangentielle du patin qui est interposé entre un logement de chape et un patin, de façon à ce que ledit ressort de précharge sollicite en permanence ledit patin selon une direction tangentielle par rapport à la rotation du disque de frein, notamment dans le même sens que lors d'un freinage en marche avant. Cette caractéristique a pour avantage de réduire le jeu entre un patin de frein et un logement de chape et ainsi de stabiliser le patin par rapport à la chape. En outre, cela amortit le déplacement du patin par rapport à la chape, réduisant la vitesse d'impact dudit patin contre la chape, permettant de réduire les bruits de fonctionnement.

Par exemple, un élément de glissement comprenant un ressort de précharge est placé dans un logement de chape dit « arrière » de manière à exercer une force de rappel vers l'avant du véhicule. Typiquement, ce ressort est placé du côté "arrière", en définissant "l'avant" du côté de la reprise d'appui tangentiel se produisant lors d'un freinage dans le sens le plus fréquent le sens du freinage en marche avant du véhicule.

De préférence, le ressort de précharge tangentielle est monté comprimé entre une surface d'appui dite supérieure du rebord de logement de la chape et une face supérieure d'appui du patin. Il est par exemple réalisé par un élément linéaire ou lamellaire faisant partie intégrante du glisseur.

De préférence, le nez de l'étrier comprend au moins une encoche et le patin de frein extérieur comprend au moins une saillie ménagée sur sa face opposée à sa face en contact avec le disque, de façon à ce que l'au moins une saillie s'engage dans l'au moins une encoche de façon à coopérer ensemble pour maintenir ledit patin en translation tangentielle et en translation radiale.

Le patin extérieur, sur sa face opposée à sa face en contact avec le disque, porte un ou plusieurs ressorts qui font saillie au moins axialement pour maintenir ledit patin extérieur en appui contre la face intérieure du nez, en prenant appui sur une face extérieure du nez opposée à ladite face intérieure.

Par exemple, le patin extérieur ne porte pas d'oreilles, ni d'extension latérale représentant une surface de moins de 50% de la surface disponible pour la longueur de ladite extension et sur la hauteur du patin. Il a par exemple, sur ses extrémités latérales, un contour continument convexe ou des concavités dont le creux ne dépasse pas 10% voire 5% de la largeur totale du patin.

Selon certains modes de réalisation, le nez et le corps de l'étrier sont formés d'une seule pièce venue de matière.

Cependant, selon une famille de modes de réalisation préférés, le corps de l'étrier est réalisé en au moins deux parties distinctes, dont l'une comprend le corps et inclut le cylindre de frein, et l'autre comprend le nez et inclut les alésages de guidage, la partie de nez étant fixée à la partie de corps par vissage. Par exemple, des vis traversent le corps et viennent s'ancrer dans la partie de nez.

Typiquement, la voûte et le nez sont formés d'une seule pièce venue de matière, laquelle inclut les alésages de guidage qui reçoivent les colonnettes de guidage.

De préférence, alternativement ou en combinaison, la voûte et le nez de l'étrier sont formés d'une seule pièce venue de matière, laquelle est constituée d'un matériau différent de celui du corps de l'étrier. Par exemple, la voûte et le nez sont en un matériau d'une bonne rigidité, tel que fonte ou acier. Le corps de l'étrier est par exemple en en alliage d'aluminium, qui permet un gain de masse et présente une bonne coulabilité.

Plus particulièrement, le nez présente, dans son intersection avec l'axe de déplacement du piston de frein, une continuité de matière ou une ouverture inférieure à 50% du diamètre dudit piston de frein. La rigidité du nez en est améliorée, ainsi que la protection contre l'environnement, sans compromettre la simplicité de fabrication.

Selon un second aspect, il est proposé un véhicule comprenant un frein à disque comprenant une ou plusieurs caractéristiques énoncées précédemment.

Selon un troisième aspect de l'invention, il est proposé un procédé d'assemblage d'un frein à disque comprenant un étrier réalisé en au moins deux parties distinctes selon les caractéristiques énoncées précédemment, le procédé comprenant les étapes suivantes, dans cet ordre ou dans un autre ordre :
- réaliser ou fournir un corps d'étrier de frein comprenant des moyens de positionnement et/ou de fixation permettant de recevoir un nez d'étrier,
- parmi une pluralité de modèles de nez, différents entre eux et compatibles avec ledit corps d'étrier pour réaliser plusieurs modèles possibles d'étrier différents entre eux, réaliser ou fournir un nez d'étrier choisi d'un modèle déterminé pour réaliser un étrier d'un modèle d'étrier choisi parmi lesdits modèles possibles d'étriers,
- positionner et fixer le nez choisi avec ledit corps d'étrier, de façon à réaliser un étrier dudit modèle d'étrier choisi.

De préférence, le nez d'étrier est choisi parmi un ensemble de plusieurs nez présentant des dimensions différentes, de façon à former un étrier d'un modèle choisi présentant une dimension choisie parmi une pluralité de dimensions possibles, par exemple pour l'écartement entre le piston et le nez, ou la largeur du nez.

En combinaison ou alternativement, le nez d'étrier est choisi parmi un ensemble de plusieurs nez de différents matériaux, de façon à former un étrier d'un modèle choisi présentant un poids et/ou une rigidité choisis parmi une pluralité de poids différents et/ou de rigidités différentes, par exemple selon le niveau requis de performances, de confort et/ou de coût.

Ces caractéristiques d'étrier réalisé en plusieurs parties, ou "composite", lorsqu'elles sont associées à cette architecture de guidage, permettent de nombreux avantages portant sur le frein lui-même et sur son processus d'industrialisation et de fabrication voire de maintenance. Elles permettent en particulier une meilleure souplesse de ce processus et diminuent ou contournent certaines contraintes dans les processus de modification ou d'adaptation d'un modèle de frein existant à des besoins différents, par exemple en matière de performances, dimensions, coût, ou un compromis de ces différents facteurs.

Une telle architecture permet une meilleure optimisation des compromis techniques ; en particulier pour, à la fois :
- améliorer la rigidité du frein, par exemple en utilisant une forme et/ou un matériau plus rigide dans la région où c'est utile,
- améliorer le guidage de l'ensemble des éléments mobiles du frein en toutes circonstances d'utilisation, et
- diminuer la masse du frein, par exemple en utilisant un matériau léger là où ce n'est pas gênant,
- limiter la complexité et le coût de fabrication et d'assemblage.
Elle permet par exemple d'améliorer le compromis entre les performances de freinage et le confort sonore ; tout en minimisant la masse suspendue, donc les émissions de poussières et la consommation, et donc les émissions de dioxyde de carbone.

En outre, sa complexité et son coût de fabrication et d'assemblage sont diminués.

Ces particularités confèrent à l'invention plusieurs avantages. Elles permettent d'offrir une flexibilité de choix de montage des différents éléments afin de produire plusieurs modèles possibles d'étrier. De plus, de par la forme standard du corps d'étrier ainsi réalisé, le corps d'étrier devient compatible avec des éléments qui résulteraient des évolutions techniques du nez d'étrier. Le dispositif ainsi constitué permet une meilleure souplesse et diminue ou contourne certaines contraintes dans les processus de modification ou d'adaptation d'un modèle de frein existant à des besoins différents, par exemple en matière de performances, dimensions, coût, ou un compromis de ces différents facteurs.

L'invention permet d'améliorer la flexibilité de conception du frein et du véhicule qui le porte, en apportant une modularité au sein d'une gamme de freins de performances différentes, ou "scalability" en terminologie anglo-saxonne. Elle permet aussi une meilleure souplesse de leur fabrication au sein de chaînes de fabrication pouvant travailler sur plusieurs modèles différents ou assemblés avec des options différentes, en diminuant le nombre de composants et de références nécessaire pour une même gamme.

### Liste des figures

D'autres particularités et avantages de l'invention ressortiront de la description détaillée d'un mode de mise en œuvre nullement limitatif, et des dessins annexés sur lesquels :
- la FIGURE 1 est une vue simplifiée en perspective qui illustre un frein selon un exemple de mode de réalisation de l'invention, dans une version à étrier monobloc et avec un nez à deux doigts séparés recevant les ressorts de maintien axial du patin extérieur ;
- la FIGURE 2 est une vue simplifiée en perspective qui illustre un deuxième exemple de mode de réalisation de l'invention, dans une version à étrier en deux parties assemblées par vissage, avec un nez sans ouverture axiale et un seul ressort de maintien axial du patin extérieur ;
- la FIGURE 3 illustre le frein de la FIGURE 2 en position sur le disque de frein, en une vue latérale simplifiée dans un plan perpendiculaire plan du disque ;
- la FIGURE 4 est une vue partielle, dans l'axe de la roue, qui illustre le patin intérieur positionné dans la chape avec ses éléments de glissement et ses ressorts de maintien radial, par exemple pour le frein de la FIGURE 1 ou de la FIGURE 2 ;
- la FIGURE 5 est une vue en perspective qui illustre le patin intérieur de la FIGURE 4 avec ses ressorts de maintien radial, avant montage dans la chape ;
- les FIGURE 6a, b et c sont des vues en bout partielles, qui illustrent différentes variantes de forme de ressort de maintien radial pour le patin intérieur ;
- la FIGURE 7 est une vue en perspective qui illustre un élément de glissement à butée tangentielle basse, par exemple en position avant dans le frein d'une des FIGURE 1 à FIGURE 3 ;
- la FIGURE 8 est une vue en perspective qui illustre un élément de glissement à butée tangentielle basse et ressort de précharge, par exemple en position arrière dans le frein d'une des FIGURE 1 à FIGURE 3 ;
- la FIGURE 9 est une vue simplifiée en perspective partielle qui illustre le patin intérieur monté, avec ressort de maintien radial et glisseur à précharge, dans le logement de patin du côté arrière de la chape réduite, par exemple dans le frein d'une des FIGURE 1 à FIGURE 3 ;
- la FIGURE 10 est un organigramme schématique qui illustre un exemple de mode de réalisation du procédé d'assemblage selon l'invention, par exemple du frein d'une des FIGURE 2 ou FIGURE 3.

### Description d'un exemple de mode de réalisation

Différentes directions sont définies ici par rapport à l'axe de la roue freinée : une direction "axiale" est une direction parallèle à cet axe ; une direction "radiale" est une direction formant un rayon de la rotation du disque autour de cet axe, ou parallèle ou sensiblement parallèle à un tel rayon ; et une direction "tangentielle" est une direction tangente à cette rotation, ou parallèle ou sensiblement parallèle à une telle tangente.

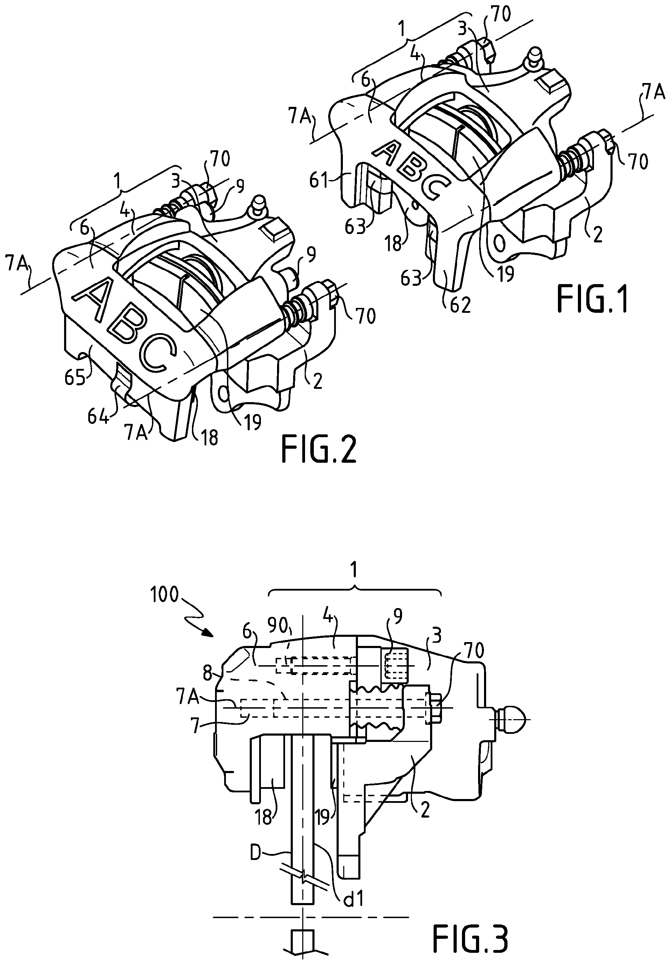

Les FIGURES 1, 2 et 3 illustrent un frein à disque 100 pour véhicule automobile.

Le frein comprend un étrier de type à étrier coulissant comprenant deux branches destinées à enjamber un secteur de disque de frein avec une branche de chaque côté du disque.

L'étrier 1 comprend un corps d'étrier 3, réalisant une branche intérieure, dans lequel est ménagé un cylindre de piston (non représenté), lequel étant agencé et configuré pour recevoir un piston de frein qui est monté coulissant et est actionné pour appuyer un patin de frein intérieur 19 contre une face intérieure d1 du disque de frein D (visible seulement sur la FIGURE 3).

L'étrier comprend un nez 6, solidaire dudit corps 3 par une voûte 4, réalisant une branche extérieure de l'étrier et recevant, de manière fixe en rotation et en translation, un patin de frein extérieur 18.

En référence à la FIGURE 3, lesdits patins de frein 18, 19 sont disposés de part et d'autre du disque de frein D de façon à être appliqués contre les faces opposées du disque sous l'effet d'un actionnement du piston et par appui sur une face intérieure du nez.

En référence à la FIGURE 1, le nez 6 d'étrier présente deux doigts 61, 62, s'étendant principalement verticalement, séparés de manière à définir entre ceux-ci une ouverture axiale dans le prolongement du cylindre du piston. L'ouverture axiale est telle que l'écartement entre les doigts est au moins égal au diamètre du cylindre. Les doigts permettent de recevoir des ressorts de maintien axial du patin extérieur. En référence à la FIGURE 1, un patin de frein extérieur 18 est maintenu en position contre le doigt 61 grâce à un ressort de maintien extérieur 63.

En référence à la FIGURE 2, le nez 6 d'étrier présente une extension radiale 65 dans le prolongement du nez, de manière à définir une bande de matière s'étendant verticalement de façon à recouvrir le dos du patin extérieur 18 sur toute la longueur frontale du nez. L'extension 65 masque ici complètement le passage vers le cylindre, ou peut aussi laisser une ouverture réduite par rapport à celle de la FIGURE 1, par exemple inférieure à 50% du diamètre du cylindre. Le patin extérieur 18 est alors maintenu en position par un ressort de maintien 64, par exemple qui pince l'extension radiale 65 en la contournant par-dessous. Cette extension radiale 65, parce qu'elle recouvre plus complètement la longueur frontale du nez, permet aussi une plus grande surface disponible pour y apposer un marquage, par exemple un logo ou une marque de fabricant.

En référence aux FIGURES 2 et 3, le corps 3 est réalisé en deux parties distinctes, dont l'une comprend le corps 3 incluant le cylindre de frein, et l'autre partie comprend le nez 6, qui est fixé au corps par vissage 9. En référence à la FIGURE 3, la voûte 4 du nez 6 comprend deux alésages 90 dans chacun desquels est ménagé un taraudage recevant une vis d'assemblage 9. Un alésage débouchant est réalisé dans le corps 3 de façon que la vis 9 traverse celui-ci et vienne s'ancrer dans le nez. De préférence, deux vis sont prévues pour raccorder la partie corps 3 avec la partie nez 6.

Le frein à disque comprend en outre une chape 2. La chape est fixe en rotation par rapport au véhicule et s'étend du côté intérieur du véhicule par rapport au plan du disque de frein D, voir FIGURE 3. En référence aux FIGURES 1, 2 et 3, la chape 2 porte l'étrier de frein par l'intermédiaire de deux colonnettes 8. En référence à la FIGURE 3, le nez 6 d'étrier comprend deux alésages de guidage 7, agencés et configurés chacun pour recevoir de façon coulissante une colonnette de guidage 8 qui est portée de façon solidaire par la chape 2. Chaque colonnette 8 est fixée dans un orifice 20 de la chape 2 au moyen d'une vis 70. L'étrier est ainsi mobile en translation sur la chape 2 selon une direction axiale 7A.

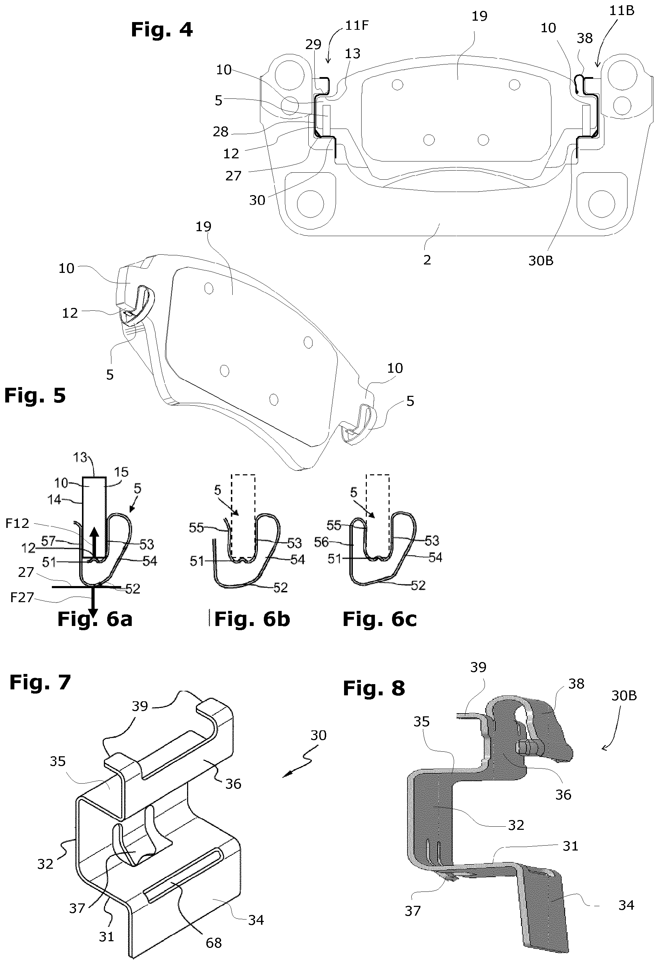

En outre la chape 2 porte le patin de frein intérieur 19. En référence à la FIGURE 4, ladite chape 2 comprend deux logements de patin 11 agencés et configurés pour recevoir le patin de frein intérieur 19 de manière fixe en rotation et coulissante axialement. Les logements 11 sont agencés de manière à recevoir les extrémités longitudinales du patin intérieur 19.

En référence à la FIGURE 4, le patin de frein intérieur 19 comprend deux oreilles de montage 10 dépassant de deux de ses extrémités latérales opposées, chaque oreille 10 étant agencée et configurée pour être montée dans un logement de patin 11 de ladite chape 2 de manière coulissante axialement. Chaque oreille coopère avec un logement de patin 11 pour recevoir :
- un maintien tangentiel, par butée sur une surface latérale de logement 28 du logement de patin 11, et
- un maintien radial, par butée sur une surface inférieure de logement 27 et sur une surface supérieure de logement 29 du logement de patin 11.

En références aux FIGURES 4, 5, le frein comprend deux ressorts de maintien radial 5, en forme d'escargot, agencés et configurés chacun pour se fixer sur une oreille 10 du patin intérieur 19. En référence à la FIGURE 4, chaque ressort 5 est en outre inséré dans un logement de patin 11 par appui sur l'une des faces de ce logement. Les deux ressorts de maintien radial 5 permettent de maintenir en position le patin intérieur 19 par rapport à la chape 2. En outre, cette caractéristique permet de diminuer ou d'éliminer des bruits de fonctionnement, c'est-à-dire lors d'un déplacement axial des oreilles dans les logements de patin 11.

En référence à la FIGURE 4, l'ensemble formé par chaque oreille 10 avec son ressort 5 est inséré dans son logement 11, en comprimant ledit ressort. Ainsi comprimé, chaque ressort 5 exerce une pression F27 dirigée vers le bas sur la surface inférieure 27 du logement et une pression F12 dirigée vers le haut sur une face inférieure 12 de l'oreille du patin (voir FIGURE 6a). Il force donc l'oreille du patin à être plaquée par sa face supérieure 13 contre la surface supérieure 29 du logement de la chape, par l'intermédiaire du glisseur 30. Le ressort est ici de forme lamellaire, mais peut aussi être de forme filaire.

En référence aux FIGURES 6a, 6b et 6c, chaque ressort 5 enserre et pince deux faces axiales 14, 15 de l'oreille 10 et possède une partie inférieure 52 destinée à s'appuyer sur la surface inférieure de logement 27 (voir FIGURES 4 et 6a) de manière à écarter la face inférieure 12 de l'oreille de la surface inférieure de logement. Le ressort 5 comprend :
- une première branche, dite d'appui 51, placée contre la face inférieure 12 de l'oreille,
- une deuxième branche, dite de glissement 52, de forme courbe dont une surface convexe vient en contact glissant avec la surface inférieure de logement 27 par l'intermédiaire du glisseur 30, la deuxième branche s'étendant parallèlement à un plan perpendiculaire au plan de l'oreille,
- une troisième branche, dite de serrage 53, s'appuyant sur une face axiale 15 de l'oreille et reliée à la première branche d'appui 51, et
- une quatrième branche, dite de raccordement 54, qui relie la troisième branche de serrage 53 à la deuxième branche de glissement 52.
Les différentes branches ont des propriétés élastiques et permettent d'écarter les branches d'appui 51 et de glissement 52 l'une de l'autre.

Lors d'une commande de freinage, le patin intérieur 19 est appuyé sur le disque par le piston, de telle façon que les oreilles 10 se déplacent aisément dans leur logement 11, selon une direction axiale. Lors de ce mouvement, chaque oreille 10 est maintenue en contact glissant sur la surface supérieure 29 de son logement, par le ressort 5 qui s'appuie et se déplace sur la surface inférieure de logement 27.

En référence à la FIGURE 6a, le ressort 5 présente une forme ouverte et comprend une septième branche de serrage 57, s'appuyant sur une face axiale 14 de l'oreille opposée à la face axiale 15. La branche de serrage 57 est directement reliée à l'extrémité de la branche de glissement 52. Les branches de serrage 53 et 57 enserrent les faces axiales 15, 14 de l'oreille ce qui permet un montage du ressort sur l'oreille.

La FIGURE 6b présente une variante de réalisation du ressort dans laquelle une cinquième branche de serrage 55 est reliée directement à la première branche d'appui 51 et permet d'enserrer les faces 14 et 15 de l'oreille en coopération avec la branche 53, sans passer par la branche de glissement 52.

La FIGURE 6c représente une variante de réalisation de la FIGURE 6b, qui présente une forme fermée et dans laquelle une sixième branche de raccordement 56 relie les branches de glissement 52 et de serrage 55 ce qui permet de rigidifier le ressort 5.

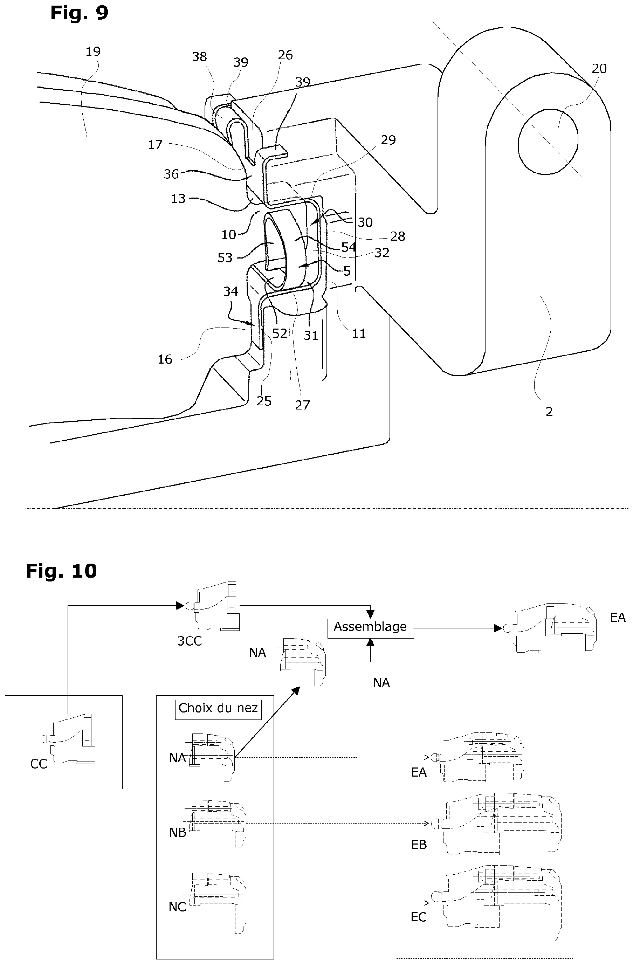

Le frein comprend en outre deux éléments de glissement, ou "sliders", l'un 30 côté avant et l'autre 30B côté arrière, qui sont agencés de manière à présenter une forme lamellaire sensiblement complémentaire à la forme d'un logement de patin 11 de la chape une fois mis en place dans ledit logement. Chaque élément de glissement 30 est reçu dans un logement de patin de manière à recouvrir au moins les surfaces inférieure 27, latérale 28 et supérieure 29 du logement 11 de la chape (voir FIGURE 9). Chaque élément de glissement 30 est interposé entre une oreille 10 et les surfaces de son logement de patin 11 (voir FIGURE 9). Il est de préférence en acier à ressort.

En référence aux FIGURES 7, 8 et 9, chaque élément de glissement 30 comprend au moins :
- une aile de glissement 31, d'orientation horizontale, qui s'appuie sur une surface inférieure de logement et est destinée à recevoir un appui glissant de la branche de glissement 52 (voir FIGURE 9) du ressort de maintien radial, pour fournir à l'oreille un maintien radial tout en lui permettant un glissement axial, et
- une aile de butée tangentielle 32 latérale, qui s'appuie sur une surface latérale 28 du logement et est destinée à recevoir un appui de l'oreille pour lui fournir un maintien tangentiel lors du freinage,
- une aile de butée tangentielle dite basse 34, d'orientation verticale, qui s'appuie sur une surface de reprise d'appui inférieure 25 de la chape, et est destinée à recevoir un appui d'une face tangentielle inférieure 16 du corps du patin 19 (voir FIGURE 9),
- une aile d'ancrage 35, d'orientation générale horizontale, qui s'écarte de l'aile de glissement 31 pour s'appuyer verticalement sur la surface supérieure de logement 29 de manière à maintenir en position l'élément de glissement dans son logement,
- une aile de butée tangentielle dite haute 36, d'orientation verticale, qui s'appuie sur une surface de reprise d'appui supérieur 26 de la chape, et est destinée à recevoir un appui d'une face tangentielle supérieure 17 du corps du patin 19.

En référence à la FIGURE 7, l'élément de glissement 30 comprend une languette d'ancrage 37 qui fait saillie vers le bas depuis l'aile de butée tangentielle latérale 32, de façon à ce que son arête d'extrémité vienne s'appuyer sur la surface inférieure de logement 27, avec un léger angle, pour former une griffe qui maintient le glisseur 30 au fond de son logement 11.

La FIGURE 8 représente une variante de réalisation de la FIGURE 7, dans laquelle l'élément de glissement 30B comprend un ressort de précharge tangentielle du patin 38 relié à l'aile de butée tangentielle dite haute 36, obtenu ici en repliant l'extrémité de la lamelle de manière à réaliser une forme en épingle à cheveux. En référence à la FIGURE 9, le ressort 38 est interposé entre la surface de reprise d'appui supérieur 26 de la chape et la face supérieure 17 du corps du patin de frein intérieure 19 afin de solliciter en permanence le patin 19 selon une direction tangentielle, de préférence d'arrière en avant. De préférence, le ressort 38 est monté comprimé entre le patin et la surface de reprise d'appui supérieur 26 de la chape. Le ressort 38 permet d'amortir le retour du patin de frein 19 contre la chape, que ce retour résulte d'un simple relâchement de l'effort de freinage, voire d'un relâchement de l'effort de freinage accompagné d'un passage de marche arrière en marche avant. L'invention permet de réduire considérablement les bruits générés par les mouvements d'un patin 19 de frein dans une chape 2 tout en conservant une stabilité de fonctionnement du patin 19. La raideur du ressort 38 de précharge est avantageusement choisie de manière à ce qu'elle soit satisfaisante pour paramétrer la vitesse de déplacement du patin 19 lors du changement de sens de marche entre la marche avant et la marche arrière.

En référence aux FIGURES 7, 8 et 9, l'élément de glissement 30 comprend deux pattes de maintien axial 39 reliées à l'aile de butée tangentielle dite haute 36. Elles permettent d'immobiliser axialement l'élément de glissement 30 par rapport à la chape. Les pattes 39 s'étendent sensiblement horizontalement vers l'arrière et enserrent entre elle la partie de la chape 2 qui porte la surface de reprise d'appui supérieur 26.

La FIGURE 9 montre un élément de glissement 30B et un ressort de maintien radial 5 dans un état de sollicitation ; l'élément de glissement 30B étant dans un logement de chape et le ressort de maintien radiale 5 étant positionné entre une oreille 10 de patin et l'aile de glissement 31 de l'élément de glissement. Le ressort 5 est ainsi comprimé et exerce ainsi une précharge de la part de l'aile de glissement 31. Ce ressort 38 permet d'assurer en permanence une charge minimale et/ou de précontrainte entre les oreilles 10 du patin et les logements 11 de la chape d'un côté ou des deux. Ainsi, le patin de frein 19 n'a plus de jeu à rattraper lorsqu'il est soumis à un couple de rotation résultant du frottement du patin sur le disque de frein, et le bruit d'impact contre la chape est diminué.

De préférence, le glisseur 30 de la FIGURE 7 est utilisé dans le logement de patin 11F situé du côté "avant" de la chape, c'est à dire du côté où s'appuie le patin lors d'un freinage en marche avant ; et le glisseur 30F de la FIGURE 8 est utilisé dans le logement de patin 11B situé du côté "arrière" du patin. Ainsi, le ressort de précharge 38 du glisseur arrière 30F maintient en permanence le patin en contact avec les surfaces d'appui tangentiel 26 et 28 du côté avant de la chape. Lors d'un freinage en marche avant, le patin n'a ainsi aucune course à rattraper avant de venir en appui pour réaliser le freinage, ce qui diminue évite les bruits de choc et rend le freinage plus immédiat lorsque le véhicule est en marche avant.

On va maintenant décrire un procédé d'assemblage d'un frein à disque, représenté aux FIGURES 2 et 3, en référence à la FIGURE 10.

Le procédé d'assemblage comprend les étapes suivantes, dans cet ordre ou dans un autre ordre :
- réaliser ou fournir un corps d'étrier de frein 3CC, d'un modèle dit corps commun, comprenant des moyens de positionnement et/ou de fixation permettant de recevoir un nez d'étrier,
- parmi une pluralité de nez, de modèles NA, NB, NC différents entre eux et compatibles avec ledit corps d'étrier 3CC pour réaliser plusieurs modèles possibles d'étrier EA, EB, EC différents entre eux, réaliser ou fournir un nez d'étrier choisi 6NA d'un modèle NA déterminé pour réaliser un étrier d'un modèle d'étrier EA choisi parmi lesdits modèles possibles d'étriers EA, EB, EC,
- positionner et fixer le nez choisi 6NA avec ledit corps d'étrier 3CC, de façon à réaliser un étrier 1EA dudit modèle d'étrier choisi.

En référence à la FIGURE 10, un corps d'étrier générique 3CC et un nez d'étrier 6NA de modèle NA sont fournis puis assemblés pour réaliser un étrier de frein 6EA.

Les différences entre les nez d'étrier NA, NB, NC sont choisies parmi de nombreuses caractéristiques, qui peuvent varier selon les configurations ou les gammes. Dans l'exemple de la FIGURE 10 sont illustrées des dimensions différentes de nez, par exemple pour l'écartement entre le piston et le nez, ou la largeur du nez. En référence à la FIGURE 10, l'écartement entre le piston et le nez augmente entre chaque modèle : NC étant un modèle présentant une voûte 4 plus longue et réalisant ainsi étrier EC d'un écartement plus grand que le modèle NB, qui lui-même présente une voûte et réalise un écartement EB plus grand que l'étrier EA obtenu avec le nez modèle NA. Les différences peuvent aussi porter sur la forme du nez 6 recevant le patin extérieur par le choix et/ou la forme des doigts 61, 62 ou de l'extension radiale 65, ou sur le matériau du nez et donc sa rigidité, ou sur des différences de couleur, ou d'aspect graphique comme illustré par l'inscription représentée en FIGURE 1 et 2.

Par exemple, le nez d'étrier est réalisé en fonte et le corps d'étrier est réalisé en alliage d'aluminium.

Bien sûr, l'invention n'est pas limitée aux exemples qui viennent d'être décrits et de nombreux aménagements peuvent être apportés à ces exemples sans sortir du cadre de l'invention, qui est définie par les revendications.

### Nomenclature

- 100: frein à disque
- 1: étrier
- 2: chape
- 3: corps d'étrier
- 4: voûte
- 5: ressort de maintien radial
- 6: nez d'étrier
- 7: alésages de guidage
- 7A: axe de l'alésage de guidage
- 8: colonnettes de guidage
- 9: vis
- 10: oreilles de patin intérieur
- 11: logements d'oreille (logement de patin)
- 11F, 11B: logement avant, logement arrière
- 12: face inférieure d'oreille
- 13: face supérieure d'oreille
- 14, 15: faces axiales d'oreille
- 16: face tangentielle inférieure du corps de patin
- 17: face tangentielle supérieure du corps de patin
- 18: patin de frein extérieur
- 19: patin de frein intérieur
- 20: alésage de fixation de la colonnette sur la chape
- 25: surface de reprise d'appui inférieure de la chape
- 26: surface de reprise d'appui supérieure de la chape
- 27: surface inférieure de logement du patin, chape
- 28: surface latérale de logement du patin, chape
- 29: surface supérieure de logement du patin, chape
- 30: élément de glissement (ou guide de glissement, ou glisseur)
- 30B: glisseur arrière avec ressort de précharge
- 31: aile de glissement du glisseur
- 32: aile de butée tangentielle latérale du glisseur
- 34: aile de butée tangentielle basse du glisseur
- 35: aile d'ancrage du glisseur
- 36: aile de butée tangentielle haute du glisseur
- 37: languette d'ancrage du glisseur
- 38: ressort de précharge tangentielle du glisseur
- 39: pattes de maintien axial du glisseur
- 51: première branche d'appui, ressort de maintien radial
- 52: deuxième branche de glissement du ressort de maintien radial
- 53: troisième branche de serrage du ressort de maintien radial
- 54: quatrième branche de raccordement du ressort de maintien radial
- 55: cinquième branche de serrage du ressort de maintien radial
- 56: sixième branche de raccordement du ressort de maintien radial
- 57: septième branche de serrage du ressort de maintien radial
- 61, 62: doigts de nez d'étrier
- 63, 64: ressorts de maintien de patin de frein extérieur
- 65: extension de nez d'étrier
- 70: vis de colonnette
- 90: alésage taraudé de fixation de nez
- D: disque de frein
- d1: face intérieure du disque de frein
- CC: corps d'étrier
- F27, F12: appuis du ressort sur le logement de patin
- NA: nez d'étrier, modèle A
- NB: nez d'étrier, modèle B
- NC: nez d'étrier, modèle C
- EA: étrier, modèle A
- EB: étrier, modèle B
- EC: étrier, modèle C

## Revendications

1. Frein à disque (100) pour véhicule comprenant au moins :
- un étrier (1) de frein à disque de type à étrier coulissant, comprenant deux branches, agencées pour enjamber un secteur d'un disque de frein (D) avec une branche de chaque côté du disque, lequel étrier est muni :
∘ d'un corps (3) comprenant au moins un cylindre de piston, ménagé dans une partie réalisant une branche intérieure de l'étrier, lequel cylindre est agencé et configuré pour recevoir un piston de frein qui est monté coulissant et est actionné pour appuyer un patin de frein intérieur (19) contre une face intérieure du disque de frein,
∘ d'un nez (6), solidaire dudit corps (3) par une voûte (4), ledit nez réalisant une branche extérieure de l'étrier et recevant de manière fixe un patin de frein extérieur (18) ;
- une chape (2), fixe en rotation par rapport au véhicule et s'étendant d'un seul côté par rapport au plan du disque de frein, ladite chape comprenant au moins un logement de patin (11) agencé et configuré pour recevoir le patin de frein intérieur (19) de manière fixe en rotation et coulissante axialement ;
lesdits patins de frein (18, 19) étant disposés de part et d'autre du disque de frein (D) de façon à être appliqués contre les faces opposées du disque sous l'effet d'un actionnement du piston et par appui sur une face intérieure du nez, et agencés de sorte que :
- le patin intérieur (19) comprend deux oreilles (10) de montage dépassant de deux de ses extrémités, chaque oreille (10) étant agencée et configurée pour être montée dans un logement de patin (11) de ladite chape (2) de manière coulissante axialement, et coopérer avec lui pour recevoir :
∘ un maintien tangentiel, par butée sur une surface latérale de logement (28), et
∘ un maintien radial, par butée sur une surface inférieure de logement (27) et sur une surface supérieure de logement (29) ;
- le patin extérieur (18) est maintenu fixe en rotation et en translation par le nez (6) de l'étrier (1) ;
ledit frein étant **caractérisé en ce que** l'étrier comprend deux alésages de guidage (7), chaque alésage (7) étant agencé et configuré pour recevoir de façon coulissante une colonnette de guidage (8) qui est portée de façon solidaire par la chape (2), l'étrier étant ainsi mobile en translation sur la chape selon une direction axiale ;
**en ce qu'**il comprend un ou plusieurs ressorts de maintien radial (5), agencés et configurés chacun pour coopérer avec une oreille (10) du patin intérieur (19), ledit ressort de maintien radial (5) étant de forme linéaire ou lamellaire et comportant une branche d'appui (51) placée contre la face inférieure (12) de l'oreille (10) du patin (19) et une branche de glissement (52) de forme courbe dont une surface convexe vient en contact glissant avec la face inférieure du logement (27), lesdites branches étant reliées entre elles de façon à écarter la face inférieure de l'oreille (12) de la face inférieure du logement (27) ;
et **en ce qu'**il comprend un ou plusieurs éléments de glissement (30) comportant un élément lamellaire d'une forme complémentaire à la forme du logement de patin de la chape, qui est placé entre une oreille (10) du patin intérieur (19) et le logement de patin correspondant dans la chape, et présente au moins :
- une aile de glissement (31), qui s'appuie sur une surface inférieure du logement (27) et reçoit un appui de la branche de glissement (51) du ressort de maintien radial (5), pour fournir à l'oreille (10) un maintien radial tout en lui permettant un glissement axial, et
- une aile de butée tangentielle (32), qui s'appuie sur une surface latérale du logement (28) et reçoit un appui de l'oreille pour lui fournir un maintien tangentiel lors du freinage.

2. Frein à disque (100) selon la revendication 1, **caractérisé en ce qu'**il comprend au moins un ressort de maintien radial (5) pour chaque oreille (10) du patin intérieur (19), et **en ce que** ledit ressort de maintien radial (5) est réalisé par un élément linéaire ou lamellaire fournissant un appui par une courbure réalisée dans un plan perpendiculaire au plan de frottement dudit patin intérieur (19).

3. Frein à disque (100) selon la revendication 1 ou 2, **caractérisé en ce que** l'élément de glissement (30) présente une partie lamellaire formant une aile de butée tangentielle dite basse (34) qui s'appuie sur une surface du logement de la chape qui est plane et verticale, qui est située en dehors de la partie qui accueille l'oreille (10) du patin, et dont le centre est situé plus près de l'axe de rotation que le centre de la force de freinage exercée entre le patin et le disque

4. Frein à disque (100) selon la revendication 3, **caractérisé en ce que** l'élément lamellaire de glissement (30) comporte un ressort de précharge tangentielle (38) du patin qui est interposé entre un logement de chape (11) et un patin (19), de façon à ce que ledit ressort de précharge (38) sollicite en permanence ledit patin (19) selon une direction tangentielle par rapport à la rotation du disque de frein, notamment dans le même sens que lors d'un freinage en marche avant.

5. Frein à disque (100) selon l'une des revendications 1 à 4, **caractérisé en ce que** le corps (3) de l'étrier est réalisé en au moins deux parties distinctes, dont l'une comprend le corps (3) et inclut le cylindre de frein, et l'autre comprend le nez (6) et inclut les alésages de guidage (7), la partie de nez étant fixée à la partie de corps par vissage.

6. Frein à disque (100) selon la revendication 5, **caractérisé en ce que** la voûte (4) et le nez (6) sont formés d'une seule pièce venue de matière, laquelle inclut les alésages de guidage (7) qui reçoivent les colonnettes de guidage (8).

7. Frein à disque (100) selon la revendication 5 ou 6, **caractérisé en ce que** la voûte (4) et le nez (6) sont formés d'une seule pièce venue de matière, notamment en fonte, laquelle est constituée d'un matériau différent de celui du corps (3) de l'étrier, notamment en alliage d'aluminium.

8. Frein à disque (100) selon l'une des revendications précédentes, **caractérisé en ce que** le nez (6) de l'étrier comprend au moins une encoche et **en ce que** le patin de frein extérieur comprend au moins une saillie ménagée sur sa face opposée à sa face en contact avec le disque, de façon à ce que l'au moins une saillie s'engage dans l'au moins une encoche de façon à coopérer ensemble pour maintenir ledit patin en translation tangentielle et en translation radiale.

9. Frein à disque (100) selon l'une des revendications précédentes, **caractérisé en ce que** le patin extérieur (18), sur sa face opposée à sa face en contact avec le disque, porte un ou plusieurs ressorts (5) qui font saillie au moins axialement pour maintenir ledit patin extérieur (18) en appui contre la face intérieure du nez, en prenant appui sur une face extérieure du nez opposée à ladite face intérieure.

10. Frein à disque (100) selon l'une quelconque des revendications 5 à 9, **caractérisé en ce que** le nez (6) présente, dans son intersection avec l'axe de déplacement du piston de frein, une continuité de matière ou une ouverture inférieure à 50% du diamètre dudit piston de frein.

11. Véhicule comprenant un frein à disque (100) selon l'une quelconque des revendications précédentes.

12. Procédé d'assemblage d'un frein à disque (100) selon l'une des revendications 5 à 11, **caractérisé en ce qu'**il comprend les étapes suivantes, dans cet ordre ou dans un autre ordre :
- réaliser ou fournir un corps (3, 3CC) d'étrier de frein comprenant des moyens de positionnement et/ou de fixation permettant de recevoir un nez (6) d'étrier,
- parmi une pluralité de modèles de nez (NA, NB, NC), différents entre eux et compatibles avec ledit corps d'étrier pour réaliser plusieurs modèles possibles d'étrier (EA, EB, EC) différents entre eux, réaliser ou fournir un nez d'étrier (6NA) choisi d'un modèle déterminé (NA) pour réaliser un étrier d'un modèle d'étrier (EA) choisi parmi lesdits modèles possibles d'étriers,
- positionner et fixer le nez choisi (6NA) avec ledit corps d'étrier (3CC), de façon à réaliser un étrier (1EA) dudit modèle d'étrier (EA) choisi.

13. Procédé d'assemblage selon la revendication précédente, **caractérisé en ce que** le nez (6) d'étrier est choisi parmi un ensemble de plusieurs nez présentant des dimensions différentes, de façon à former un étrier d'un modèle choisi présentant une dimension choisie parmi une pluralité de dimensions possibles,
et/ou parmi un ensemble de plusieurs nez de différents matériaux, de façon à former un étrier d'un modèle choisi présentant un poids et/ou une rigidité choisis parmi une pluralité de poids différents et/ou de rigidités différentes.

## Patentansprüche

1. Scheibenbremse (100) für ein Fahrzeug, wenigstens umfassend:
- einen Sattel (1) einer Scheibenbremse vom Typ mit Schiebesattel, der zwei Schenkel umfasst, die dazu eingerichtet sind, einen Sektor einer Bremsscheibe (D) mit einem Schenkel auf jeder Seite der Scheibe zu überspannen, wobei der Sattel ausgestattet ist:
∘ mit einem Körper (3), der wenigstens einen Kolbenzylinder umfasst, welcher in einem einen Innenschenkel des Sattels bildenden Teil ausgebildet ist, wobei der Zylinder dazu eingerichtet und ausgelegt ist, einen Bremskolben aufzunehmen, der verschieblich angebracht ist und betätigt wird, um einen inneren Bremsschuh (19) gegen eine Innenseite der Bremsscheibe zu drücken,
∘ mit einer Nase (6), die durch ein Gewölbe (4) mit dem Körper (3) fest verbunden ist, wobei die Nase einen Außenschenkel des Sattels ausbildet und einen äußeren Bremsschuh (18) fest aufnimmt;
- einen Bremsträger (2), der gegenüber dem Fahrzeug drehfest ist und sich auf einer einzigen Seite bezogen auf die Ebene der Bremsscheibe erstreckt, wobei der Bremsträger wenigstens eine Schuhaufnahme (11) umfasst, die dazu eingerichtet und ausgelegt ist, den inneren Bremsschuh (19) drehfest und axial verschieblich aufzunehmen;
wobei die Bremsschuhe (18, 19) auf beiden Seiten der Bremsscheibe (D) angeordnet sind, so dass sie unter der Wirkung einer Betätigung des Kolbens und durch Anlage an einer Innenseite der Nase gegen die gegenüberliegenden Seiten der Scheibe gedrückt werden, und derart angeordnet sind, dass:
- der innere Schuh (19) zwei Montageohren (10) umfasst, die von zwei seiner Enden vorstehen, wobei jedes Ohr (10) dazu eingerichtet und ausgelegt ist, in einer Schuhaufnahme (11) des Bremsträgers (2) axial verschieblich angebracht zu werden und mit ihr zusammenzuwirken, um Folgendes aufzunehmen::
∘ einen tangentialen Halt durch Anschlag an einer seitlichen Aufnahmefläche (28) und
∘ einen radialen Halt durch Anschlag an einer unteren Aufnahmefläche (27) und an einer oberen Aufnahmefläche (29);
- der äußere Schuh (18) durch die Nase (6) des Sattels (1) dreh- und verschiebefest gehalten wird;
wobei die Bremse **dadurch gekennzeichnet ist, dass** der Sattel zwei Führungsbohrungen (7) umfasst, wobei jede Bohrung (7) dazu eingerichtet und ausgelegt ist, eine Führungssäule (8) verschieblich aufzunehmen, die durch den Bremsträger (2) fest verbunden getragen wird, wobei der Sattel somit an dem Bremsträger in einer axialen Richtung verschiebebeweglich ist;
dass sie eine oder mehrere Federn zum radialen Halten (5) umfasst, die jeweils dazu eingerichtet und ausgelegt sind, mit einem Ohr (10) des inneren Schuhs (19) zusammenzuwirken, wobei die Radialhaltefeder (5) eine Linear- oder Lamellenform aufweist und einen Anlageschenkel (51), welcher an der Unterseite (12) des Ohrs (10) des Schuhs (19) angeordnet ist, sowie einen Gleitschenkel (52) mit gekrümmter Form umfasst, von dem eine konvexe Fläche mit der Unterseite der Aufnahme (27) in Gleitkontakt gelangt, wobei die Schenkel derart miteinander verbunden sind, dass die Unterseite des Ohrs (12) von der Unterseite der Aufnahme (27) entfernt wird;
und dass sie ein oder mehrere Gleitelemente (30) aufweist, umfassend ein lamellenförmiges Element mit einer zu der Form der Schuhaufnahme des Bremsträgers komplementären Form, das zwischen einem Ohr (10) des inneren Schuhs (19) und der entsprechenden Schuhaufnahme in dem Bremsträger angeordnet ist, und wenigstens aufweist:
- einen Gleitflügel (31), der sich auf einer unteren Fläche der Aufnahme (27) abstützt und ein Abstützen des Gleitschenkels (51) der Radialhaltefeder (5) aufnimmt, um dem Ohr (10) einen radialen Halt bereitzustellen und ihm gleichzeitig ein axiales Gleiten zu ermöglichen, und
- einen tangentialen Anschlagflügel (32), der sich auf einer Seitenfläche der Aufnahme (28) abstützt und ein Abstützen des Ohrs aufnimmt, um ihm beim Bremsen einen tangentialen Halt bereitzustellen.

2. Scheibenbremse (100) nach Anspruch 1, **dadurch gekennzeichnet, dass** sie wenigstens eine Radialhaltefeder (5) für jedes Ohr (10) des inneren Schuhs (19) umfasst und dass die Radialhaltefeder (5) durch ein lineares oder lamellenförmiges Element ausgebildet ist, das durch eine Krümmung, welche in einer Ebene senkrecht zu der Reibungsebene des inneren Schuhs (19) hergestellt ist, eine Abstützung bereitstellt.

3. Scheibenbremse (100) nach Anspruch 1 oder 2, **dadurch gekennzeichnet, dass** das Gleitelement (30) einen lamellenförmigen Teil aufweist, der einen sogenannten unteren tangentialen Anschlagflügel (34) bildet, welcher sich auf einer Oberfläche der Aufnahme des Bremsträgers abstützt, die eben und vertikal ist, welcher sich außerhalb des Teils befindet, der das Ohr (10) des Schuhs aufnimmt, und dessen Mitte näher an der Rotationsachse liegt als das Zentrum der zwischen dem Schuh und der Scheibe ausgeübten Bremskraft.

4. Scheibenbremse (100) nach Anspruch 3, **dadurch gekennzeichnet, dass** das lamellenförmige Gleitelement (30) eine Feder zum tangentialen Vorspannen (38) des Schuhs umfasst, die zwischen einer Bremsträgeraufnahme (11) und einem Schuh (19) angeordnet ist, so dass die Vorspannfeder (38) den Schuh (19) permanent in einer tangentialen Richtung gegenüber der Rotation der Bremsscheibe belastet, insbesondere in der gleichen Richtung wie bei einem Bremsen im Vorwärtsgang.

5. Scheibenbremse (100) nach einem der Ansprüche 1 bis 4, **dadurch gekennzeichnet, dass** der Körper (3) des Sattels aus wenigstens zwei separaten Teilen besteht, von denen einer den Körper (3) umfasst und den Bremszylinder enthält, und der andere die Nase (6) umfasst und die Führungsbohrungen (7) einschließt, wobei der Nasen-Teil an dem Körper-Teil festgeschraubt ist.

6. Scheibenbremse (100) nach Anspruch 5, **dadurch gekennzeichnet, dass** das Gewölbe (4) und die Nase (6) aus einem Stück ausgebildet sind, das die Führungsbohrungen (7) enthält, welche die Führungssäulen (8) aufnehmen.

7. Scheibenbremse (100) nach Anspruch 5 oder 6, **dadurch gekennzeichnet, dass** das Gewölbe (4) und die Nase (6) aus einem Stück ausgebildet sind, insbesondere aus einem Stück gegossen sind, welches aus einem anderen Material als der Körper (3) des Sattels, insbesondere aus Aluminiumlegierung besteht.

8. Scheibenbremse (100) nach einem der vorhergehenden Ansprüche, **dadurch gekennzeichnet, dass** die Nase (6) des Sattels wenigstens eine Nut aufweist und dass der äußere Bremsschuh wenigstens einen Vorsprung aufweist, der an seiner Seite ausgebildet ist, die von seiner mit der Scheibe in Kontakt befindlichen Seite abgewandt ist, so dass der wenigstens eine Vorsprung in die wenigstens eine Nut eingreift, um zusammenzuwirken, um den Schuh tangential verschieblich und radial verschieblich zu halten.

9. Scheibenbremse (100) nach einem der vorhergehenden Ansprüche, **dadurch gekennzeichnet, dass** der äußere Schuh (18), auf seiner Seite, welche von seiner mit der Scheibe in Kontakt befindlichen Seite abgewandt ist, eine oder mehrere Federn (5) trägt, die wenigstens axial vorspringen, um den äußeren Schuh (18) - unter Abstützen auf einer Außenseite der Nase, welche der Innenseite gegenüberliegt - an der Innenseite der Nase in Anlage zu halten.

10. Scheibenbremse (100) nach einem der Ansprüche 5 bis 9, **dadurch gekennzeichnet, dass** die Nase (6) in ihrem Schnittpunkt mit der Bewegungsachse des Bremskolbens eine Materialkontinuität oder eine Öffnung von weniger als 50 % des Durchmessers des Bremskolbens aufweist.

11. Fahrzeug, das eine Scheibenbremse (100) nach einem der vorhergehenden Ansprüche umfasst.

12. Verfahren zur Montage einer Scheibenbremse (100) nach einem der Ansprüche 5 bis 11, **gekennzeichnet dadurch, dass** es die folgenden Schritte, in dieser Reihenfolge oder in einer anderen Reihenfolge, umfasst:
- Herstellen oder Bereitstellen eines Körpers (3, 3CC) eines Bremssattels, umfassend Positionierungs- und/oder Befestigungsmittel, die ermöglichen, eine Nase (6) eines Sattels aufzunehmen,
- aus einer Vielzahl von Nasenmodellen (NA, NB, NC), die sich voneinander unterscheiden und mit dem Sattelkörper kompatibel sind, um mehrere mögliche Modelle von Sätteln (EA, EB, EC) herzustellen, die sich voneinander unterscheiden, eine ausgewählte Sattelnase (6NA) eines bestimmten Modells (NA) herzustellen oder bereitzustellen, um einen Sattel eines Sattelmodells (EA), ausgewählt aus den möglichen Sattelmodellen, herzustellen,
- Positionieren und Befestigen der ausgewählten Nase (6NA) mit dem Sattelkörper (3CC), um einen Sattel (1EA) des ausgewählten Sattelmodells (EA) herzustellen.

13. Montageverfahren nach dem vorhergehenden Anspruch, **dadurch gekennzeichnet, dass** die Sattelnase (6) aus einem Satz von mehreren Nasen mit unterschiedlichen Abmessungen ausgewählt ist, um einen Sattel eines ausgewählten Modells mit einer Abmessung, ausgewählt aus einer Vielzahl möglicher Abmessungen, zu bilden,
und/oder aus einem Satz von mehreren Nasen aus verschiedenen Materialien, um einen Sattel eines ausgewählten Modells mit einem Gewicht und/oder einer Steifigkeit, ausgewählt aus einer Vielzahl unterschiedlicher Gewichte und/oder unterschiedlicher Steifigkeiten, zu bilden.

## Claims

1. Disk brake (100) for a vehicle comprising at least:
- a disk brake calliper (1) of the sliding calliper type, comprising two arms, arranged to straddle a sector of a brake disk (D) with one arm on each side of the disk, which calliper is equipped with:
∘ a body (3) comprising at least one piston cylinder, arranged in a part forming an inner arm of the calliper, which cylinder is arranged and configured to receive a brake piston which is mounted sliding and is actuated to press an inner brake pad (19) against an inner face of the brake disk,
∘ a nose (6) firmly fixed to said body (3) by an arch (4), said nose forming an outer arm of the calliper and receiving in a fixed manner an outer brake pad (18);
- a brake carrier (2), rotationally fixed with respect to the vehicle and extending on only one side with respect to the plane of the disk brake, said brake carrier comprising at least one pad housing (11) arranged and configured to receive the inner brake pad (19) in a rotationally fixed and axially sliding manner;
said brake pads (18, 19) being arranged on both sides of the brake disk (D) so as to be applied against the opposite faces of the disk under the effect of an actuation of the piston and by pressing on an inner face of the nose, and arranged so that:
- the inner pad (19) comprises two mounting lugs (10) protruding from two of its ends, each lug (10) being arranged and configured to be mounted in a pad housing (11) of said brake carrier (2), in axially sliding manner, and to cooperate therewith to receive:
∘ tangential retention, by abutment on a lateral housing surface (28), and
∘ radial retention, by abutment on a lower housing surface (27) and on an upper housing surface (29);
- the outer pad (18) is held rotationally and translationally fixed by the nose (6) of the calliper (1);
said brake being **characterized in that** the calliper comprises two guide bores (7), each bore (7) being arranged and configured to receive in sliding manner a guide pin (8) which is borne in firmly fixed manner by the brake carrier (2), the calliper being thus translationally mobile on the brake carrier in an axial direction;
**in that** it comprises one or more radial retaining springs (5), each arranged and configured to cooperate with a lug (10) of the inner pad (19), said radial retaining spring (5) being linear or lamellar in form and comprising a support arm (51) placed against the lower face (12) of the lug (10) of the pad (19) and a sliding arm (52) curved in form, a convex surface of which comes into sliding contact with the lower face of the housing (27), said arms being linked to each other so as to move the lower face of the lug (12) apart from the lower face of the housing (27);
and **in that** it comprises one or more sliding elements (30) comprising a lamellar element complementary in form to the form of the pad housing of the brake carrier, which is placed between a lug (10) of the inner pad (19) and the corresponding pad housing in the brake carrier, and has at least:
- a sliding wing (31) which rests against a lower surface of the housing (27) and receives support from the sliding arm (51) of the radial retaining spring (5) to provide the lug (10) with radial retention while allowing it to slide axially, and
- a tangential abutment wing (32), which rests against a lateral surface of the housing (28) and receives support from the lug to provide it with tangential retention during braking.

2. Disk brake (100) according to claim 1, **characterized in that** it comprises at least one radial retaining spring (5) for each lug (10) of the inner pad (19) and **in that** said radial retaining spring (5) is produced by a linear or lamellar element providing support by means of a curvature produced in a plane perpendicular to the friction plane of said inner pad (19).

3. Disk brake (100) according to claim 1 or 2, **characterized in that** the sliding element (30) has a lamellar part forming an tangential abutment wing referred to as low (34) which rests against a housing surface of the brake carrier which is flat and vertical, which is situated outside the part which receives the lug (10) of the pad, and the centre of which is situated closer to the axis of rotation than the centre of the braking force exerted between the pad and the disk.

4. Disk brake (100) according to claim 3, **characterized in that** the lamellar sliding element (30) comprises a tangential preloading spring (38) of the pad which is interposed between a housing of the brake carrier (11) and a pad (19), so that said preloading spring (38) continuously exerts a force on said pad (19) in a tangential direction with respect to the rotation of the brake disk, in particular in the same direction as during braking during forward movement.

5. Disk brake (100) according to one of claims 1 to 4, **characterized in that** the body (3) of the calliper is produced in at least two separate parts, one of which comprises the body (3) and includes the brake cylinder, and the other comprises the nose (6) and includes the guide bores (7), the nose part being fixed to the body part by screwing.

6. Disk brake (100) according to claim 5, **characterized in that** the arch (4) and the nose (6) are formed integrally in one piece, which includes the guide bores (7) which receive the guide pins (8).

7. Disk brake (100) according to claim 5 or 6, **characterized in that** the arch (4) and the nose (6) are formed integrally in one piece, in particular as a casting, which is constituted by a material different from that of the body (3) of the calliper, in particular of aluminium alloy.

8. Disk brake (100) according to one of the preceding claims, **characterized in that** the nose (6) of the calliper comprises at least one notch and **in that** the outer brake pad comprises at least one projection arranged on its face opposite to its face in contact with the disk, so that the at least one projection is engaged in the at least one groove so as to cooperate together to hold said pad in tangential translation and in radial translation.

9. Disk brake (100) according to one of the preceding claims, **characterized in that** the outer pad (18), on its face opposite to its face in contact with the disk, bears one or more springs (5) which project at least axially to keep said outer pad (18) resting against the inner face of the nose, while being supported on an outer face of the nose opposite to said inner face.

10. Disk brake (100) according to any one of claims 5 to 9, **characterized in that** the nose (6) has, in its intersection with the axis of movement of the brake piston, a continuity of material or an opening less than 50% of the diameter of said brake piston.

11. Vehicle comprising a disk brake (100) according to any one of the preceding claims.

12. Method for the assembly of a disk brake (100) according to one of claims 5 to 11, **characterized in that** it comprises the following steps, in this order or in another order:
- producing or providing a brake calliper body (3, 3CC) comprising means of positioning and/or fixing making it possible to receive a calliper nose (6),
- from a plurality of nose models (NA, NB, NC), different from each other and compatible with said calliper body for producing several possible calliper models (EA, EB, EC) that are different from each other, producing or providing a calliper nose (6NA) selected from a determined model (NA), to produce a calliper of a calliper model (EA) selected from said possible calliper models,
- positioning and fixing the selected nose (6NA) with said calliper body (3CC) so as to produce a calliper (1EA) of said selected calliper model (EA).

13. Method of assembly according to the preceding claim, **characterized in that** the calliper nose (6) is selected from a set of several noses having different dimensions, so as to form a calliper of a selected model having a dimension selected from a plurality of possible dimensions,
and/or from a set of several noses of different materials, so as to form a calliper of a selected model having a weight and/or a rigidity selected from a plurality of different weights and/or different rigidities.
